# EUROPEAN PATENT APPLICATION

(11) **EP 3 550 820 A1**
(43) Date of publication of application: **09.10.2019**
(21) Application number: 17876124.3
(22) Date of filing: 22.11.2017
(51) Int. Cl.: H04N 5/232, G03B 17/18

(54) **PHOTOGRAPHING ADJUSTMENT INFORMATION DERIVING DEVICE, PHOTOGRAPHING APPARATUS, PHOTOGRAPHING ADJUSTMENT INFORMATION DERIVING METHOD, CONTROL PROGRAM, AND RECORDING MEDIUM**

(30) Priority: 01.12.2016 JP 2016234516
(71) Applicant: Sharp Kabushiki Kaisha, Sakai City, Osaka 590-8522 (JP)
(72) Inventor: IKEDA, Kyohei, Sakai City, Osaka 590-8522 (JP); YAMAMOTO, Tomoyuki, Sakai City, Osaka 590-8522 (JP)
(74) Representative: Müller Hoffmann & Partner
(86) International application number: PCT/JP2017/041928
(87) International publication number: WO 2018/101135

(57) **Abstract**

An imaging adjustment information derivation apparatus (3) includes an imaging adjustment information derivation unit (9) that derives imaging adjustment information relating to adjustment of imaging conditions of an imaging apparatus by referring to target imaging information and captured image information.

## Description

### Technical Field

An embodiment of the present invention relates to an imaging adjustment information derivation apparatus that derives imaging adjustment information.

### Background Art

In the related art, Patent Document 1 discloses an imaging apparatus that generates a multi-dimensional code in which camera settings (exposure, diaphragm, WB, and the like) in a case of capturing an image are recorded, and stores the multi-dimensional code together with the image. With the imaging apparatus described in Patent Document 1, the settings of the camera in a case that the image corresponding to the multi-dimensional code was captured can be reproduced by reading the multi-dimensional code.

Patent Document 2 discloses an imaging guide apparatus that can guide a user of a camera to capture an image with the same field of view and from the same point of view as an image captured in the past. With the imaging guide apparatus, a part of an image captured in the past is overlaid as marker display on a monitoring image of the camera, and the user of the camera is guided so that the position of the marker display coincides with the position of a target display on the monitoring image.

### Citation List

### Patent Literature

PTL 1: JP 2007-74611 A (published on March 22, 2007)
PTL 2: JP 2013-74376 A (published on April 22, 2013)

### Summary of Invention

### Technical Problem

There is a demand for technology that enables a user to easily capture an image with imaging conditions similar to target imaging conditions, such as the imaging conditions of the image captured in the past described in Patent Document 1 and 2.

In light of the problems described above, a main object of an aspect of the present invention is to provide technology that enables an image with imaging conditions similar to target imaging conditions to be easily captured.

### Solution to Problem

To solve the problem described above, an imaging adjustment information derivation apparatus according to an aspect of the present invention includes:
a captured image acquisition unit configured to acquire a captured image captured by an imaging apparatus;
a target imaging information reading unit configured to read target imaging information from the captured image, the target imaging information being information relating to target imaging conditions;
a captured image information derivation unit configured to derive captured image information by referring to the captured image, the captured image information being information relating to imaging conditions of the captured image; and
an imaging adjustment information derivation unit configured to derive imaging adjustment information relating to adjustment of the imaging conditions of the imaging apparatus by referring to the target imaging information and the captured image information.

To solve the problem described above, a method for deriving imaging adjustment information according to an aspect of the present invention includes the steps of:
acquiring a captured image captured by an imaging apparatus;
reading target imaging information from the captured image, the target imaging information being information relating to target imaging conditions;
deriving captured image information by referring to the captured image, the captured image information being information relating to imaging conditions of the captured image; and
deriving imaging adjustment information relating to adjustment of the imaging conditions of the imaging apparatus by referring to the target imaging information and the captured image information.

### Advantageous Effects of Invention

According to an aspect of the present invention, an image with imaging conditions similar to target imaging conditions can be easily captured.

### Brief Description of Drawings

FIG. 1 is a block diagram illustrating a configuration of an imaging apparatus according to Embodiment 1 of the present invention.
FIG. 2 is a flowchart for describing an imaging adjustment information derivation method performed by the imaging adjustment information derivation apparatus included in the imaging apparatus according to Embodiment 1 of the present invention.
FIGS. 3A to 3C are diagrams for describing the imaging adjustment information derivation method performed by the imaging adjustment information derivation apparatus included in the imaging apparatus according to Embodiment 1 of the present invention.
FIGS. 4A and 4B are diagrams for describing the imaging adjustment information derivation method performed by the imaging adjustment information derivation apparatus included in the imaging apparatus according to Embodiment 1 of the present invention.
FIGS. 5A and 5B are diagrams for describing an example of the output of adjustment indication information performed by the imaging apparatus according to Embodiment 1 of the present invention.
FIG. 6 is a block diagram illustrating a configuration of an imaging apparatus according to Embodiment 2 of the present invention.
FIG. 7 is a flowchart for describing an imaging adjustment information derivation method performed by the imaging adjustment information derivation apparatus included in the imaging apparatus according to Embodiment 2 of the present invention.
FIG. 8 is a block diagram illustrating a configuration of an imaging apparatus according to Embodiment 3 of the present invention.
FIG. 9 is a flowchart for describing an imaging adjustment information derivation method performed by the imaging adjustment information derivation apparatus included in the imaging apparatus according to Embodiment 3 of the present invention.

### Description of Embodiments

Embodiments of the present invention will be described below in detail with reference to the drawings.

### Embodiment 1

### Imaging Apparatus 1

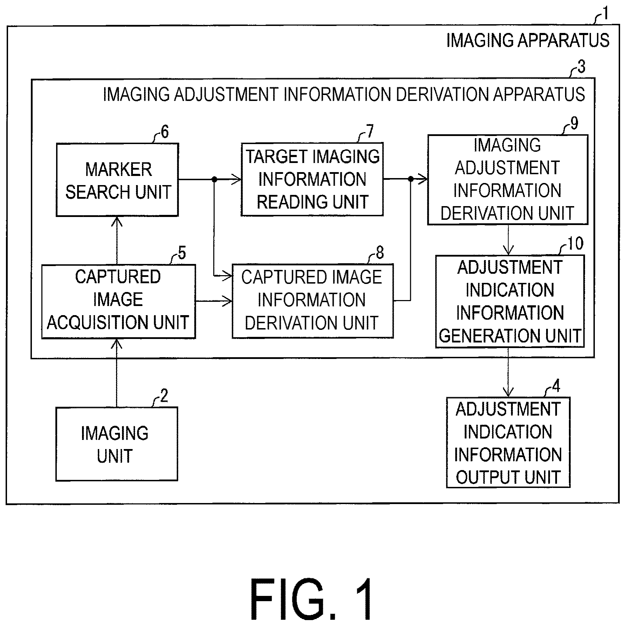

An imaging apparatus 1 according to the present embodiment will be described with reference to the drawings. FIG. 1 is a block diagram illustrating a configuration of the imaging apparatus 1. As illustrated in FIG. 1, the imaging apparatus 1 includes an imaging unit 2, an imaging adjustment information derivation apparatus 3, and an adjustment indication information output unit 4.

The imaging unit 2 captures an image including a marker (hereinafter referred to as a captured image). Note that in the present specification, the term "marker" refers to a marker disposed on the surface of the imaging target or in the vicinity of the imaging target (such as a sign located near the imaging target), and more specifically, refers to a marker that indicates the target imaging information, which is information relating to the target imaging conditions, in a case of capturing the imaging target. An example of the marker includes a two-dimensional bar code. The above-described target imaging information will be described below.

The imaging adjustment information derivation apparatus 3 derives imaging adjustment information relating to adjustment of the imaging apparatus 1 by referring to target imaging information and captured image information obtained from a captured image captured by the imaging unit 2, and generates adjustment indication information by referring to the imaging adjustment information. Note that the captured image information, the imaging adjustment information, and the adjustment indication information are also described below.

The adjustment indication information output unit 4 outputs the adjustment indication information generated by the imaging adjustment information derivation apparatus 3. Examples of the adjustment indication information output unit 4 include a display, a speaker, and the like.

### Imaging Adjustment Information Derivation Apparatus 3

The imaging adjustment information derivation apparatus 3 according to the present embodiment will be described in further detail with reference to FIG. 1. As illustrated in FIG. 1, the imaging adjustment information derivation apparatus 3 includes a captured image acquisition unit 5, a marker search unit 6, a target imaging information reading unit 7, a captured image information derivation unit 8, an imaging adjustment information derivation unit 9, and an adjustment indication information generation unit 10.

The captured image acquisition unit 5 acquires the captured image captured by the imaging unit 2. The marker search unit 6 detects a marker from the captured image acquired by the captured image acquisition unit 5 and determines marker placement information, such as the position and size of the marker in the captured image.

The target imaging information reading unit 7 reads the target imaging information from the marker detected by the marker search unit 6. Note that the present embodiment is an example in which the target imaging information reading unit 7 reads the target imaging information from the marker, but no such limitation is intended. For example, the target imaging information reading unit 7 may read the target imaging information from a "watermark" (more specifically, a digital watermark) embedded in the surface of an imaging object or near the imaging target (such as a sign located near the imaging target).

The captured image information derivation unit 8 derives captured image information from the captured image acquired by the captured image acquisition unit 5 and the marker placement information determined by the marker search unit 6.

The imaging adjustment information derivation unit 9 derives imaging adjustment information by referring to the target imaging information read by the target imaging information reading unit 7 and the captured image information derived by the captured image information derivation unit 8. The adjustment indication information generation unit 10 generates adjustment indication information by referring to the imaging adjustment information derived by the captured image information derivation unit 8.

### Imaging Adjustment Information Derivation Method

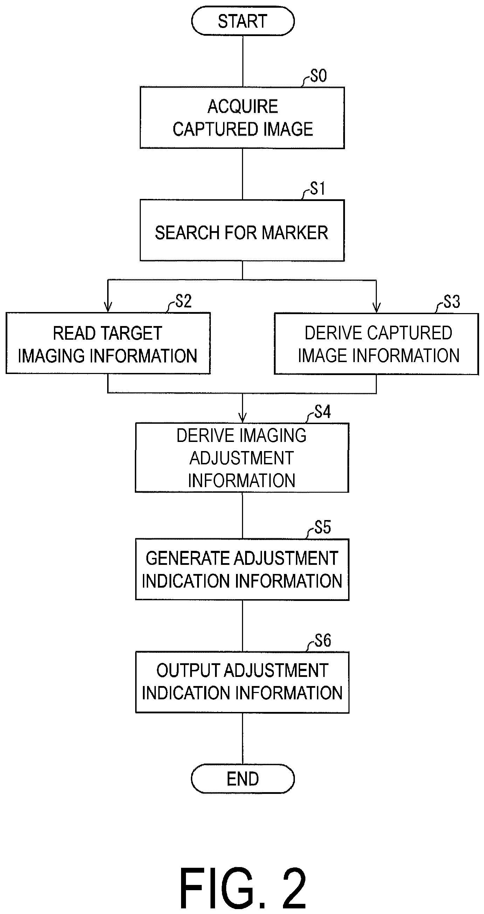

An imaging adjustment information derivation method using the imaging adjustment information derivation apparatus 3 according to the present embodiment will be described in detail with reference to FIG. 2. FIG. 2 is a flowchart illustrating an example of an imaging adjustment information derivation method using the imaging adjustment information derivation apparatus 3 according to the present embodiment. Each step illustrated in FIG. 2 may be started in a case that the imaging apparatus 1 including the imaging adjustment information derivation apparatus 3 is activated, may be started in a case that the imaging adjustment information derivation apparatus 3 is independently activated, or can be started at a discretionary timing.

First, the captured image acquisition unit 5 acquires the captured image captured by the imaging unit 2 (step S0). Next, the marker search unit 6 detects a marker from the captured image acquired by the captured image acquisition unit 5 and determines marker placement information, such as the position and size of the marker in the captured image (step S1). The marker placement information determined by the marker search unit 6 refers to information that can be used to derive the imaging conditions at the timing when the captured image was captured. Other examples of the marker placement information include, in the captured image, the number of markers, marker color, marker orientation, the relative position of two or more markers, and the like.

Next, the target imaging information reading unit 7 reads the target imaging information from the marker detected by the marker search unit 6 (step S2). The target imaging information read by the target imaging information reading unit 7 refers to information relating to the target imaging conditions in a case that the imaging target is captured. A typical example of the target imaging conditions includes information relating to a target image, which is an image captured under the target imaging conditions. Examples of information relating to the target image include the position and shape of the marker in the target image, the image quality of the target image, the frame rate of the target image, the image size of the target image, the file format of the target image, the imaging mode of the target image, and the like. In the present embodiment, an example is described in which the target imaging information is the position and shape of the marker in the target image.

Then, in a separate step from step S2, the captured image information derivation unit 8 derives captured image information from the captured image acquired by the captured image acquisition unit 5 and the marker placement information determined by the marker search unit 6 (step S3). The captured image information derived by the captured image information derivation unit 8 refers to information relating to the imaging conditions at the timing when the captured image was captured. In other words, the captured image information refers to information for indicating the imaging conditions at the timing when the captured image was captured or information which can be changed according to the imaging conditions at the timing when the captured image is captured. Examples of information relating to the target image mainly include the position and shape of the marker in the captured image, the image quality of the captured image, the frame rate of the captured image, the image size of the captured image, the file format of the captured image, the imaging mode of the captured image, and the like. In the present embodiment, an example is described in which the captured image information is the position and shape of the marker in the captured image.

The imaging adjustment information derivation unit 9 derives imaging adjustment information by referring to the target imaging information read by the target imaging information reading unit 7 and the captured image information derived by the captured image information derivation unit 8 (step S4). The imaging adjustment information derived by the imaging adjustment information derivation unit 9 refers to information relating to adjustment of the imaging conditions for the imaging apparatus 1 to adjust the imaging conditions of the captured image to the target imaging conditions. In the present embodiment, the target imaging information is the position and shape of the marker in the target image, and the captured image information is the position and shape of the marker in the captured image. The imaging adjustment information derivation unit 9 derives information, relating to the movement or zoom of the imaging apparatus 1, for adjusting the relative position between the imaging apparatus 1 and the marker at the time when the captured image is captured, to the relative position between the imaging apparatus 1 and the marker where the target image can be captured, by referring to the position and shape of the marker in the target image and the position and shape of the marker in the captured image.

Next, the adjustment indication information generation unit 10 generates adjustment indication information by referring to the imaging adjustment information derived by the captured image information derivation unit 8 (step S5). The adjustment indication information generated by the adjustment indication information generation unit 10 refers to information that, when referenced, allows the user of the imaging apparatus 1 to adjust the imaging conditions of the imaging apparatus 1 from the imaging conditions of the captured image to the target imaging conditions. In the present embodiment, the imaging adjustment information is information, relating to the movement or zoom of the imaging apparatus 1, for adjusting the relative position between the imaging apparatus 1 and the marker, from the relative position between the imaging apparatus 1 and the marker at the timing when the captured image is captured to the relative position between the imaging apparatus 1 and the marker where the target image can be captured. Then, the adjustment indication information generation unit 10 generates adjustment indication information that, when referenced, allows the user of the imaging apparatus 1 to appropriately move or perform zoom of the imaging apparatus 1.

Next, the adjustment indication information output unit 4 outputs the adjustment indication information generated by the adjustment indication information generation unit 10 (step S6). This allows the user of the imaging apparatus 1 to adjust the imaging conditions of the imaging apparatus 1 from the imaging conditions of the captured image to the target imaging conditions by referring to the adjustment indication information output by the adjustment indication information output unit 4. In the present embodiment, the adjustment indication information output unit 4 is a display which outputs navigation, for the movement or zoom of the imaging apparatus 1, that allows the user to adjust the relative position between the imaging apparatus 1 and the marker from the relative position between the imaging apparatus 1 and the marker at the timing when the captured image is captured to the relative position between the imaging apparatus 1 and the marker where the target image can be captured. These details will be described below.

### Examples of Target Imaging Information, Captured Image Information, and Imaging Adjustment Information

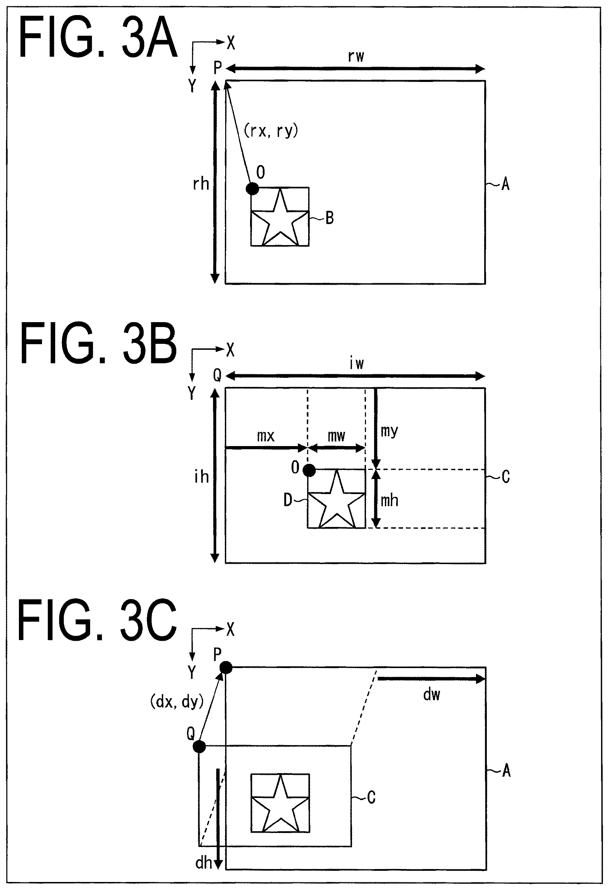

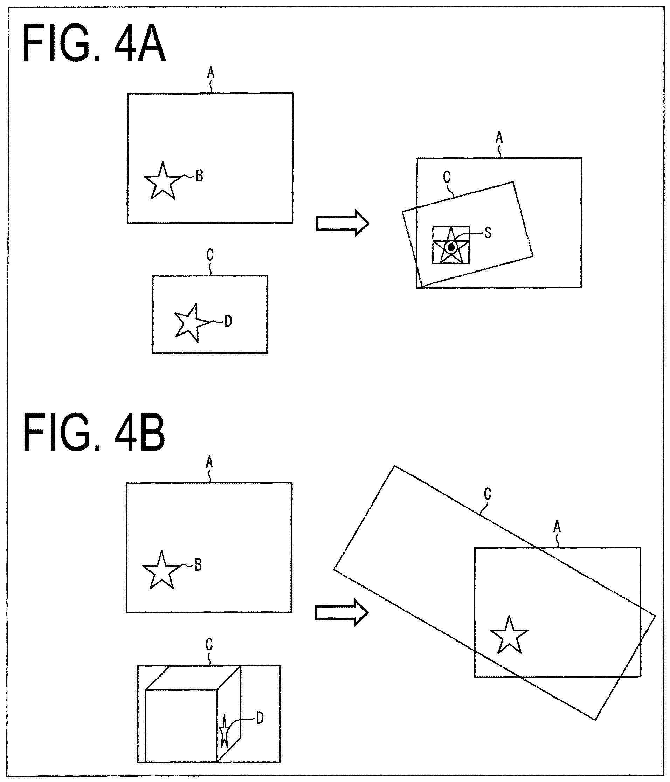

Examples of target imaging information, captured image information, and imaging adjustment information will be described in detail with reference to FIGS. 3A to 3C and FIGS. 4A and 4B. FIG. 3A illustrates an example of target imaging information read by the target imaging information reading unit 7. More specifically, the target imaging information in FIG. 3A is the position and shape of a marker B, in a target image A captured under the target imaging conditions, that are expressed in numerical values. As illustrated in FIG. 3A, using the marker B as a reference point, the position of the upper left end of the marker B is defined as an origin point O, and a position P of the upper left end of the target image A is indicated by (rx, ry) in the X-coordinate and Y-coordinate. The width in the X-axis direction and the height in the Y-axis direction of the target image A are indicated by rw and rh, respectively. Additionally, rx and rw are numerical values, with the width of the marker B in the X-axis direction used as a unit. Additionally, ry and rh are numerical values, with the height of the marker B in the Y-axis direction used as a unit.

Next, FIG. 3B illustrates an example of the captured image information derived by the captured image information derivation unit 8. More specifically, the captured image information in FIG. 3B is the position and shape of a marker D, in a captured image C, that are expressed in numerical values. As illustrated in FIG. 3B, using the marker D as a reference point, the position of the upper left end of the marker D is defined as an origin point O, and a position Q of the upper left end of the captured image C is indicated by -mx (mx is positive) in the X-coordinate and -my (my is positive) in the Y-coordinate. The width in the X-axis direction and the height in the Y-axis direction of the marker D are indicated by mw and mh, respectively. The width in the X-axis direction and the height in the Y-axis direction of the captured image C are indicated by iw and ih, respectively. Accordingly, with the width mw of the marker D in the X-axis direction used as a unit, the X coordinate of the position Q of the upper left end of the captured image C is indicated by -mx/mw, and the width in the X-axis direction of the captured image C is indicated by iw/mw. Also, with the height mh of the marker D in the Y-axis direction used as a unit, the Y coordinate of the position Q of the upper left end of the captured image C is indicated by -my/mh, and the height in the Y-axis direction of the captured image C is indicated by ih/mh.

Next, FIG. 3C illustrates an example of the imaging adjustment information derived by the imaging adjustment information derivation unit 9 by referring to the target imaging information and the captured image information. More specifically, the imaging adjustment information in FIG. 3C is derived by referring to the target imaging information illustrated in FIG. 3A and the captured image information illustrated in FIG. 3B. As illustrated in FIG. 3C, the imaging adjustment information is illustrated by three vectors for adjusting the captured image C to the target image A. More specifically, the first vector is a vector from the upper left end position Q of the captured image C to the upper left end position P of the target image A that corresponds to the origin point. The vector can be expressed by a formula corresponding to the value of the coordinates of the position P minus the coordinates of the position Q, with dx = rx + mx/mw for the X coordinate component and dy = ry + my/mh for the Y coordinate component. In addition, the second vector is a vector that indicates the change in width in the X-axis direction from the width of the captured image C in the X-axis direction to the width of the target image A in the X-axis direction. The vector can be expressed by a formula corresponding to the value of the width of the target image A minus the width of the captured image C, with dw = rw - iw/mw for the X coordinate component. In addition, the third vector is a vector that indicates the change in height in the Y-axis direction from the height of the captured image C in the Y-axis direction to the height of the target image A in the Y-axis direction. The vector can be expressed by a formula corresponding to the value of the width of the target image A minus the width of the captured image C, with dh = rh - ih/mh for the Y coordinate component.

As described above, the imaging adjustment information is indicated by the three vectors. Guided by these vectors, the user of the imaging apparatus 1 or the imaging apparatus 1 itself can move or perform zoom of the imaging apparatus 1 (details described below). This allows the relative position of the imaging apparatus 1 to be adjusted from the relative position between the imaging apparatus 1 and the marker D at the timing when the captured image C is captured to the relative position between the imaging apparatus 1 and the marker B where the target image A can be captured.

Another example of the imaging adjustment information is illustrated in FIGS. 4A and 4B. When compared to the relative position between the imaging apparatus 1 and the marker D in FIG. 3B, FIG. 4A illustrates an example in which the captured image C is captured with the imaging apparatus 1 inclining with respect to the marker D. In this case, as well as the three vectors described above, another vector may indicate rotation of the captured image C with respect to the target image A so that the marker B of the target image A coincides with the marker D of the captured image C (for example, in FIG. 4A, this vector indicates a rotation vector upwards from the page from a position S on the page, where the position S is the center of the marker B and the marker D).

When compared to the relative position between the imaging apparatus 1 and the marker D in FIG. 3B, FIG. 4B illustrates an example in which the captured image C is captured with the imaging apparatus 1 three-dimensionally out of position with respect to the marker D. In this case, higher-order affine transformation is performed so that the marker B of the target image A coincides with the marker D of the captured image C. This allows a vector (imaging adjustment information) for adjusting the captured image C to the target image A to be determined, as with the vectors described above.

### Example of Imaging Indication Information

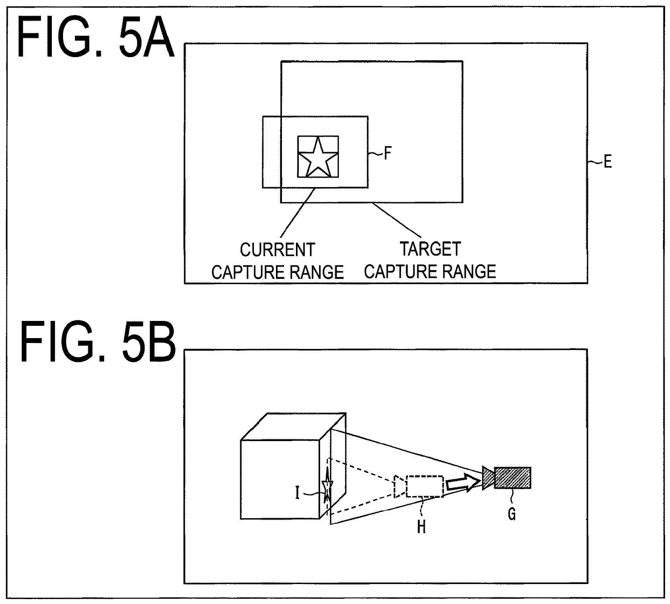

An example of imaging indication information will be described in detail below with reference to FIGS. 5A and 5B. FIGS. 5A and 5B each illustrate an example of imaging indication information output by the display (adjustment indication information output unit 4). As illustrated in FIG. 5A, the imaging indication information is an image overlaying a target image E and the captured image F so that the marker in the target image E coincides with the marker in the captured image F (the captured image is being constantly updated). The user of the imaging apparatus 1 moves the imaging apparatus 1 so that the captured image coincides with the target image by referring to the image. This allows the relative position between the imaging apparatus 1 and the marker to be adjusted from the relative position between the imaging apparatus 1 and the marker at the timing when the captured image is captured to the relative position between the imaging apparatus 1 and the marker where the target image can be captured.

Further, in another example, as illustrated in FIG. 5B, the imaging indication information may be an image for indicating the relative position between the imaging apparatus 1 at position H where the captured image is captured and a marker I and the relative position between the imaging apparatus 1 at a position G where the target image can be captured and the marker I. The user of the imaging apparatus 1, referring to the image, moves the imaging apparatus 1 so that the imaging apparatus 1 at the relative position H (the relative position H is constantly being updated) coincides with the imaging apparatus 1 at the relative position G. This allows the relative position between the imaging apparatus 1 and the marker to be adjusted from the relative position H between the imaging apparatus 1 and the marker at the timing when the captured image is captured to the relative position G between the imaging apparatus 1 and the marker where the target image can be captured.

Note that in an embodiment in which the adjustment indication information output unit 4 is a speaker, the adjustment indication information may be output by voice.

### Other Examples of Imaging Conditions included in Target Imaging Information, Captured Image Information, Imaging Adjustment Information, and Imaging Indication Information

In the examples described above, the target imaging information is the position and shape of the marker in the target image (information relating to the relative position between the marker and the imaging apparatus 1), and the captured image information is the position and shape of the marker in the captured image (information relating to the relative position between the marker and the imaging apparatus 1). Also, the imaging adjustment information derived from the information is information, relating to the movement or zoom of the imaging apparatus 1, that adjusts the relative position between the imaging apparatus 1 and the marker from the relative position between the imaging apparatus 1 and the marker at the timing when the captured image is captured to the relative position between the imaging apparatus 1 and the marker where the target image can be captured (information relating to adjustment of the relative position between the marker and the imaging apparatus 1). Further, the imaging adjustment information generated from the imaging adjustment information is information that allows the user of the imaging apparatus 1 to appropriately move or perform zoom of the imaging apparatus 1 by referring to the imaging adjustment information.

However, the imaging conditions included in target imaging information, captured image information, imaging adjustment information, and imaging indication information are not limited to those described above. The imaging conditions included in target imaging information, captured image information, imaging adjustment information, and imaging indication information may be image quality, frame rate, image size, file format, imaging mode, and the like. The target imaging information may be the image quality, frame rate, image size, file format, imaging mode, and the like of the target image. The captured image information may be the image quality, frame rate, image size, file format, imaging mode, and the like of the captured image.

The imaging adjustment information derived by referring to the target imaging information and the captured image information described above may be the adjustment of the image quality, frame rate, image size, file format, imaging mode, and the like. In this case, the imaging adjustment information may be the information relating to adjustment of the imaging conditions for adjusting the image quality, frame rate, image size, file format, imaging mode, and the like of the captured image to the image quality, frame rate, image size, file format, imaging mode, and the like of the target image. Also, the imaging indication information generated from the imaging adjustment information may be information that, when referenced, allows the user of the imaging apparatus 1 to appropriately adjust the image quality, frame rate, image size, file format, imaging mode, and the like of the captured image. Note that the imaging conditions that the captured image information derivation unit 8 cannot derive from the captured image may be acquired by a captured image additional information acquisition unit 32 (described below) from outside the imaging adjustment information derivation apparatus 3.

### Supplement of Embodiment 1

As described above, the imaging adjustment information derivation apparatus 3 included in the imaging apparatus 1 according to the present embodiment acquires a captured image including a marker, reads from the marker target imaging information, which is information relating to target imaging conditions, and derives captured image information, which is information relating to the imaging conditions of the captured image, by referring to the captured image. The imaging adjustment information derivation apparatus 3 derives imaging adjustment information relating to adjustment of the imaging conditions of the imaging apparatus 1 by referring to the target imaging information and the captured image information.

As a result, the target imaging conditions can be acquired from the marker and the imaging conditions of the captured image can be acquired from the captured image. This allows imaging adjustment information corresponding to these imaging conditions and relating to adjustment of the imaging conditions of the imaging apparatus to be derived. Then, the user of the imaging apparatus 1 can easily capture an image with imaging conditions similar to target imaging conditions, by referring to the imaging adjustment information based on the imaging adjustment information.

More specifically, the imaging adjustment information derivation apparatus 3 included in the imaging apparatus 1 according to the present embodiment reads, from the marker, the position and shape of the marker in the target image, and the captured image information derivation unit derives the position and shape of the marker in the captured image by referring to the captured image. The imaging adjustment information derivation apparatus 3 derives imaging adjustment information relating to adjustment of the relative position between the marker and the imaging apparatus 1 from the relative position between the marker and the imaging apparatus 1 at the timing when the captured image is captured to the relative position between the marker and the imaging apparatus 1 where the target image can be captured by referring to the position and shape of the marker in the target image and the position and shape of the marker in the captured image.

As a result, the position and shape of the marker in the target image can be acquired from the marker and the position and shape of the marker in the captured image can be acquired from the captured image. This allows imaging adjustment information corresponding to these imaging conditions to be derived. Then, the user of the imaging apparatus 1 can move the imaging apparatus 1 from the relative position between the marker and the imaging apparatus 1 at the timing when the captured image is captured to the relative position between the marker and the imaging apparatus 1 where the target image can be captured and can easily capture an image with imaging conditions similar to target imaging conditions by referring to the imaging adjustment information based on the imaging adjustment information.

### Embodiment 2

Embodiment 2 of the present invention will be described below with reference to the drawings. Note that an imaging apparatus 20 according to the present embodiment includes an imaging apparatus adjustment unit 22 and an imaging apparatus controller 23 of an imaging adjustment information derivation apparatus 21 instead of the adjustment indication information output unit 4 and the adjustment indication information generation unit 10 of the imaging adjustment information derivation apparatus 3, but otherwise has the same configuration as the imaging apparatus 20 according to Embodiment 1. Thus, components having the same function as the members included in the imaging apparatus 20 described in Embodiment 1 are denoted with the same reference signs, and descriptions thereof will be omitted.

### Imaging Apparatus 20

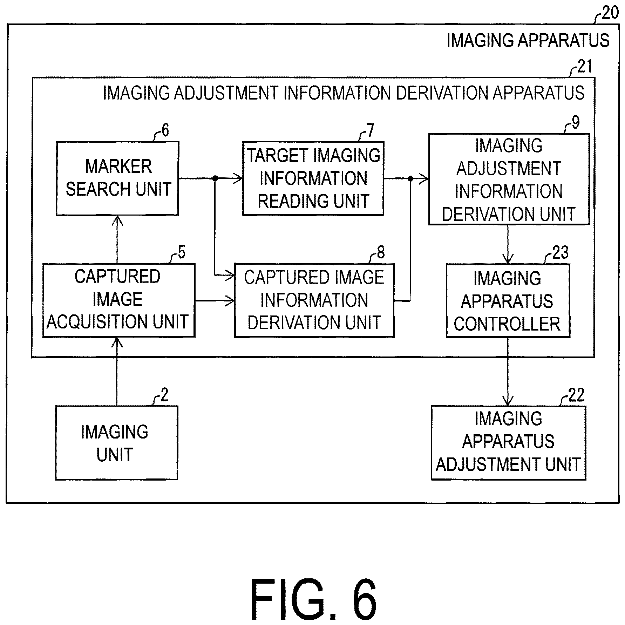

An imaging apparatus 20 according to the present embodiment will be described with reference to FIG. 6. FIG. 6 is a block diagram illustrating the configuration of the imaging apparatus 20 according to the present embodiment. As shown in FIG. 6, the imaging apparatus 20 does not include the adjustment indication information generation unit 10 of the imaging adjustment information derivation apparatus 21 and the adjustment indication information output unit 4, compared to the imaging apparatus 20 according to Embodiment 1, and instead includes the imaging apparatus controller 23 of the imaging adjustment information derivation apparatus 21 and the imaging apparatus adjustment unit 22.

The imaging apparatus controller 23 controls the imaging apparatus adjustment unit 22 to adjust the imaging conditions of the imaging apparatus 20 from the imaging conditions of the captured image derived by the captured image information derivation unit 8 to the target imaging conditions read by the target imaging information reading unit 7 by referring to the imaging adjustment information derived by the imaging adjustment information derivation unit 9.

The imaging apparatus adjustment unit 22 adjusts the imaging conditions of the imaging apparatus 20 according to the control of the imaging apparatus controller 23.

### Imaging Adjustment Information Derivation Method

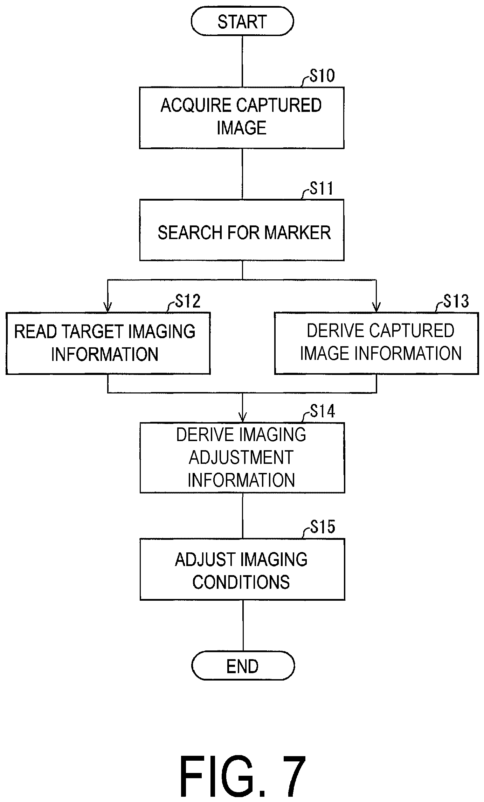

An imaging adjustment information derivation method using the imaging apparatus 20 according to the present embodiment will be described in detail with reference to FIG. 7. FIG. 7 is a flowchart illustrating an example of an imaging adjustment information derivation method using the imaging adjustment information derivation apparatus 21 according to the present embodiment. Note that a detailed description of steps that are similar to the steps of the imaging adjustment information derivation method according to Embodiment 1 will be omitted.

First, the captured image acquisition unit 5 acquires the captured image captured by the imaging unit 2 (step S10). Next, the marker search unit 6 detects a marker from the captured image acquired by the captured image acquisition unit 5 and determines marker placement information, such as the position and size of the marker in the captured image (step S11).

Next, the target imaging information reading unit 7 reads the target imaging information from the marker detected by the marker search unit 6 (step SI2).

Then, in a separate step from step S12, the captured image information derivation unit 8 derives captured image information from the captured image acquired by the captured image acquisition unit 5 and the marker placement information determined by the marker search unit 6 (step S13).

The imaging adjustment information derivation unit 9 derives imaging adjustment information by referring to the target imaging information read by the target imaging information reading unit 7 and the captured image information derived by the captured image information derivation unit 8 (step S14).

Next, the imaging apparatus controller 23 references the imaging adjustment information derived by the imaging adjustment information derivation unit 9 and controls the imaging apparatus adjustment unit 22 so that the imaging apparatus adjustment unit 22 adjusts the imaging conditions of the imaging apparatus 20 from the imaging conditions of the captured image derived by the captured image information derivation unit 8 to the target imaging conditions read by the target imaging information reading unit 7 (step S15). In the present embodiment, the imaging apparatus controller 23 controls the imaging apparatus adjustment unit 22 so that the imaging apparatus adjustment unit 22 adjusts the relative position between the imaging apparatus 20 and the marker from the relative position between the imaging apparatus 20 and the marker at the timing when the captured image is captured to the relative position between the imaging apparatus 20 and the marker where the target image can be captured. More specifically, the imaging apparatus adjustment unit 22 adjusts the position, orientation, and/or zoom of the imaging apparatus 20 with respect to the marker according to the control of the imaging apparatus controller 23. Note that examples of the imaging apparatus adjustment unit 22 that adjusts the position or orientation of the imaging apparatus 20 described here include a camera crane that moves the imaging apparatus 20, a rotation apparatus of a monitoring camera, a robot or drone on which the camera is installed, and the like. Further, an example of the imaging apparatus adjustment unit 22 that adjusts the zoom of the imaging apparatus 20 includes a zoom lens.

As described above, the imaging adjustment information derivation apparatus 21 included in the imaging apparatus 20 according to the present embodiment references the imaging adjustment information and controls the imaging apparatus adjustment unit 22 so that the imaging apparatus adjustment unit 22 adjusts the imaging conditions of the imaging apparatus 20 from the imaging conditions of the captured image to the target imaging conditions. This allows an image with imaging conditions similar to target imaging conditions, based on the imaging adjustment information, to be automatically captured.

More specifically, the imaging adjustment information derivation apparatus 21 included in the imaging apparatus 20 according to the present embodiment references the imaging adjustment information and controls the imaging apparatus adjustment unit 22 so that the imaging apparatus adjustment unit 22 adjusts the relative position between the imaging apparatus 20 and the marker from the relative position between the imaging apparatus 20 and the marker at the timing when the captured image is captured to the relative position between the imaging apparatus 20 and the marker where the target image can be captured. This allows the imaging apparatus 20 to be automatically moved from the relative position between the marker and the imaging apparatus 20 at the timing when the captured image is captured to the relative position between the marker and the imaging apparatus 20 where the target image can be captured according to the imaging adjustment information. Thus, an image with imaging conditions similar to target imaging conditions can be easily captured.

### Embodiment 3

Embodiment 3 of the present invention will be described below with reference to the drawings. Note that an imaging apparatus 30 according to the present embodiment has a configuration similar to that of the imaging apparatus 30 according to Embodiment 1, but further includes the captured image additional information acquisition unit 32. Thus, components having the same function as the members included in the imaging apparatus 30 described in Embodiment 1 are denoted with the same reference signs, and descriptions thereof will be omitted.

### Imaging Apparatus 30

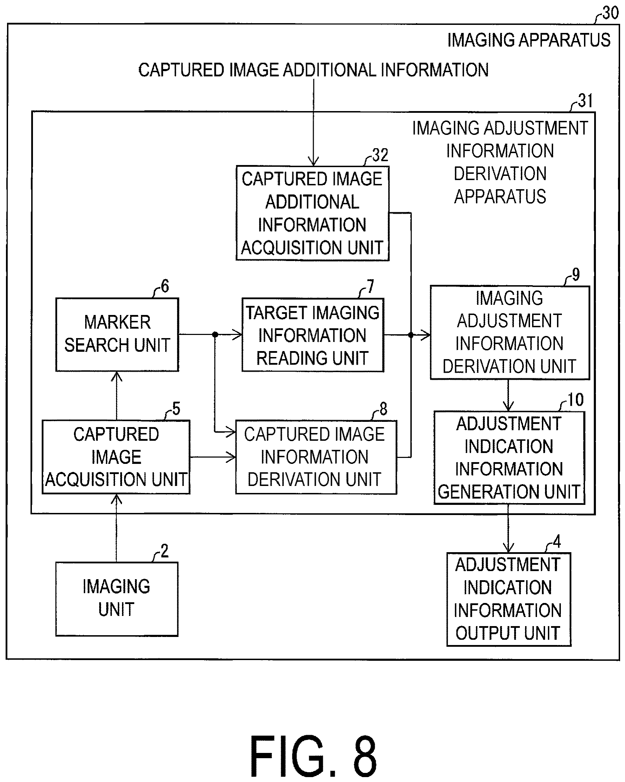

The imaging apparatus 30 according to the present embodiment will be described with reference to FIG. 8. FIG. 8 is a block diagram illustrating the configuration of the imaging apparatus 30 according to the present embodiment. As illustrated in FIG. 8, the imaging apparatus 30 has a configuration similar to that of the imaging apparatus 30 according to Embodiment 1, but further includes the captured image additional information acquisition unit 32.

The captured image additional information acquisition unit 32 acquires captured image additional information, which is additional information relating to the imaging conditions of the captured image, from outside of an imaging adjustment information derivation apparatus 31.

### Imaging Adjustment Information Derivation Method

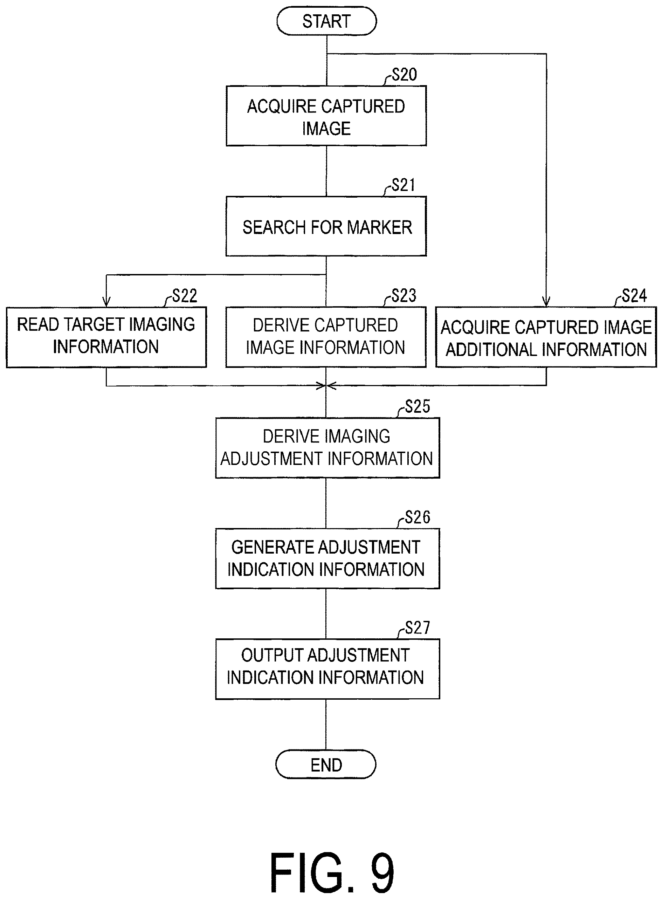

An imaging adjustment information derivation method using the imaging apparatus 30 according to the present embodiment will be described in detail with reference to FIG. 9. FIG. 9 is a flowchart illustrating an example of an imaging adjustment information derivation method using the imaging adjustment information derivation apparatus 31 according to the present embodiment. Note that a detailed description of steps that are similar to the steps of the imaging adjustment information derivation method according to Embodiment 1 will be omitted.

First, the captured image acquisition unit 5 acquires the captured image captured by the imaging unit 2 (step S20). Next, the marker search unit 6 detects a marker from the captured image acquired by the captured image acquisition unit 5 and determines marker placement information, such as the position and size of the marker in the captured image (step S21).

Next, the target imaging information reading unit 7 reads the target imaging information from the marker detected by the marker search unit 6 (step S22).

Then, in a separate step from step S22, the captured image information derivation unit 8 derives captured image information from the captured image acquired by the captured image acquisition unit 5 and the marker placement information determined by the marker search unit 6 (step S23).

In addition, in a separate step from steps S22 and S23, the captured image additional information acquisition unit 32 acquires captured image additional information from outside of the imaging adjustment information derivation apparatus 31 (step S24). The captured image additional information acquired by the captured image additional information acquisition unit 32 may be information which the captured image information derivation unit 8 cannot derive from the captured image. Also, the captured image additional information may be information for indicating the state of the imaging apparatus 30 or information for indicating the external environment of the imaging apparatus 30. Examples of the captured image additional information include the inclination of the imaging apparatus 30 detected by an inclination sensor, positional information of the imaging apparatus 30 measured by a GPS, acceleration of the imaging apparatus 30 measured by an acceleration sensor, information or operation signals detected by a sensor on an auxiliary equipment (drone, camera crane, or the like) of the imaging apparatus 30, and the like.

The imaging adjustment information derivation unit 9 derives imaging adjustment information by referring to the target imaging information read by the target imaging information reading unit 7, the captured image information derived by the captured image information derivation unit 8, and the captured image information acquired by the captured image additional information acquisition unit 32 (step S25). Specific examples of the imaging adjustment information will be described below.

Next, the adjustment indication information generation unit 10 generates adjustment indication information by referring to the imaging adjustment information derived by the captured image information derivation unit 8 (step S26).

Next, the adjustment indication information output unit 4 outputs the adjustment indication information generated by the adjustment indication information generation unit 10 (step S27).

Instead of the steps S26 and S27, as for the imaging apparatus 30 according to Embodiment 2, the imaging apparatus controller 23 may reference the imaging adjustment information derived by the imaging adjustment information derivation unit 9 and control the imaging apparatus adjustment unit 22 so that the imaging apparatus adjustment unit 22 adjusts the imaging conditions of the imaging apparatus 30 from the imaging conditions of the captured image derived by the captured image information derivation unit 8 to the target imaging conditions read by the target imaging information reading unit 7.

### Examples Relating to Embodiment 3

For example, in a case that the target imaging information reading unit 7 reads information relating to the target inclination of the imaging apparatus 30, as target imaging information, and the captured image additional information acquisition unit 32 acquires information relating to the inclination of the imaging apparatus 30 measured by the inclination sensor, as captured image additional information, the imaging adjustment information may be information relating to adjustment of the inclination of the imaging apparatus from the inclination of the imaging apparatus 30 measured by the inclination sensor to the target inclination of the imaging apparatus 30.

In another example, in a case that the target imaging information reading unit 7 reads positional information of the imaging apparatus 30, as target imaging information, and the captured image additional information acquisition unit 32 acquires positional information of the imaging apparatus 30 measured by GPS, as captured image additional information, the imaging adjustment information may be information relating to adjustment of the position of the imaging apparatus from the position of the imaging apparatus 30 measured by GPS to the target position of the imaging apparatus 30.

In yet another example, in a case that the target imaging information reading unit 7 reads information relating to the target acceleration of the imaging apparatus 30 (for example, a stationary state), as target imaging information, and the captured image additional information acquisition unit 32 acquires the acceleration of the imaging apparatus 30 measured by the acceleration sensor, as captured image additional information, the imaging adjustment information may be information relating to adjustment of the acceleration of the imaging apparatus 30 from the acceleration of the imaging apparatus 30 measured by the acceleration sensor to the target acceleration of the imaging apparatus 30 (for example, a stationary state).

Note that in the examples described above, the target imaging information read by the target imaging information reading unit 7 and the captured image additional information acquired by the captured image additional information acquisition unit 32 are information relating to the same type of imaging conditions. However, the target imaging information read by the target imaging information reading unit 7 and the captured image additional information acquired by the captured image additional information acquisition unit 32 may be information relating to different imaging conditions. In this case, the imaging adjustment information may be information for performing adjustment to satisfy the target imaging information read by the target imaging information reading unit 7 and the captured image additional information acquired by the captured image additional information acquisition unit 32.

In any of these examples, as in Embodiment 1, the adjustment indication information generation unit 10 generates adjustment indication information that, when referenced by the user of the imaging apparatus 30, allows the imaging conditions of the imaging apparatus 30 (see the examples described above) to be adjusted from the imaging conditions of the captured image to the target imaging conditions (see the examples described above), and the adjustment indication information output unit 4 outputs the adjustment indication information.

### Supplement to Embodiment 3

As described above, the imaging apparatus 30 according to the present embodiment acquires captured image additional information from outside of the imaging adjustment information derivation apparatus 31. Then, by referring to the acquired captured image additional information and the target imaging information including the imaging conditions corresponding to the imaging conditions included in the captured image additional information, imaging adjustment information, relating to adjustment of the imaging conditions, that cannot be derived from the captured image can be acquired. Thus, the imaging conditions can be adjusted in a wider range by using the imaging adjustment information.

### Modifications

Modifications of the embodiments of the present invention will be described below.

For example, the target imaging information read by the target imaging information reading unit 7 is information relating to the target focus of the imaging apparatus 1, 20, 30, and captured image information derived by the captured image information derivation unit 8 is information relating to the focus of the imaging apparatus 1, 20, 30 when the captured image is captured. In this case, the imaging adjustment information derived by the imaging adjustment information derivation unit 9 may be information relating to adjustment of the focus of the imaging apparatus 1, 20, 30 from the focus of the imaging apparatus 1, 20, 30 at the timing when the captured image is captured to the target focus of the imaging apparatus 1, 20, 30. Note that information relating to the focus of the imaging apparatus 1, 20, 30 at the timing when the captured image is captured may be acquired by the captured image additional information acquisition unit 32 described above.

Additionally, in another modification, the imaging apparatus 1, 20, 30 further includes an image composition unit. In the modification, the target imaging information reading unit 7 reads the texture of the surface of the imaging target on which the marker is disposed as an image from the marker. Then, the image composition unit references the captured image and the texture image read by the target imaging information reading unit 7 and composes the captured image and the texture image so as to conceal the marker in the captured image. Since the marker is hidden by the texture in the composed captured image, it is difficult to recognize whether the captured image is an image captured after the imaging adjustment information described above is derived by using the marker.

In another modification, the target imaging information read by the target imaging information reading unit 7 is information relating to an imaging prohibited region that restricts the imaging of the imaging apparatus 1, 20, 30, and captured image information derived by the captured image information derivation unit 8 is information relating to whether the imaging prohibited region is included in the captured image. Note that the imaging prohibited region is a region with the position of the marker set as a reference, in a similar manner to that of the position and shape of the marker in the target image and the captured image described above. In this modification, the imaging adjustment information derivation unit 9 may use information relating to adjustment of the position and orientation of the imaging apparatus 1, 20, 30 so that the imaging prohibited region read by the target imaging information reading unit 7 is not included in the captured image.

In another modification, the marker itself indicates target imaging information, which is information relating to the target imaging conditions, at the timing when the imaging target is captured (for example, a two-dimensional bar code). Also, in another modification, the marker itself may not indicate the target imaging information, but may indicate the URL of a site that indicates the target imaging information. In this case, the target imaging information reading unit 7 may access the site of the read URL and acquire the target imaging information.

In another modification, instead of the marker, the target imaging information reading unit 7 may recognize a specific pattern (such as a symbol, a graphic, or a face) included in the captured image and output imaging conditions corresponding to the specific pattern. In this case, the target imaging information reading unit 7 (marker information unit) records target imaging information corresponding to a specific pattern (a symbol, a figure, a face, or the like) in advance, and, in a case that the specific pattern is recognized, outputs the target imaging information corresponding to the specific pattern to the imaging adjustment information derivation unit 9.

In another modified example, the target imaging information reading unit 7 may read imaging conditions requiring that another marker (second marker) different from the marker (first marker) read from the target imaging information is displayed in the captured image. In this case, the captured image information derivation unit 8 derives information on whether the second marker is included in the captured image as captured image information. The imaging adjustment information derivation unit 9 may derive the relative position between the first marker and the second marker or may derive information relating to adjustment of the position or orientation of the imaging apparatus 1, 20, 30 such that the second marker is included in the captured image. Note that the other marker (second marker) different from the marker (first marker) read from the target imaging information may comprise a plurality of markers.

Additionally, in another modification, the imaging adjustment information derivation apparatus 3, 21, 31 may not be a single unit and may be configured by a plurality of constituting devices connected via a communication cable represented by a network. For example, the function of the imaging adjustment information derivation unit 9 may be implemented in a constituting device A, and other functions of the imaging adjustment information derivation apparatus 3, 21, 31 may be implemented in a constituting device B. In this case, the constituting device A acquires the target imaging information and the captured image information from the constituting device B via the network and outputs the imaging adjustment information to the constituting device B. In this configuration, a single constituting device A can be commonly used for a plurality of imaging apparatuses. Thus, in a case of correcting the processing steps of the imaging adjustment information derivation method, only the function of the common constituting device A needs to be corrected and the correction of the functions of a plurality of imaging apparatuses is not necessary and can be omitted. Further, imaging adjustment information for each of the plurality of imaging apparatuses can be derived and output by referring to a plurality of pieces of target imaging information or a plurality of pieces of captured image information provided from the plurality of imaging apparatuses. For example, imaging adjustment information can be determined that allows a common target to be captured in a well-balanced manner by a plurality of imaging apparatuses.

### Implementation Examples by Software

A control block (in particular, the captured image acquisition unit 5, the captured image information derivation unit 8, and the imaging adjustment information derivation unit 9) of the imaging adjustment information derivation apparatus 3, 21, 31 may be achieved with a logic circuit (hardware) formed as an integrated circuit (IC chip) or the like, or with software using a Central Processing Unit (CPU).

In the latter case, the imaging adjustment information derivation apparatus 3, 21, 31 include a CPU configured to perform commands of a program being software for achieving the functions, a Read Only Memory (ROM) or a storage device (these are referred to as "recording medium") in which the program and various pieces of data are recorded in a computer (or CPU) readable manner, and a Random Access Memory (RAM) in which the program is loaded. The computer (or CPU) reads from the recording medium and performs the program to achieve the object of the present invention. As the above-described recording medium, a "non-transitory tangible medium" such as a tape, a disk, a card, a semiconductor memory, and a programmable logic circuit can be used. The above-described program may be supplied to the above-described computer via an arbitrary transmission medium (such as a communication network and a broadcast wave) capable of transmitting the program. Note that one aspect of the present invention may also be implemented in a form of a data signal embedded in a carrier wave in which the program is embodied by electronic transmission.

### Supplement

An imaging adjustment information derivation apparatus (3, 21, 31) according to a first aspect of the present invention includes:
a captured image acquisition unit (5) configured to acquire a captured image captured by an imaging apparatus (1, 20, 30);
a target imaging information reading unit (7) configured to read target imaging information from the captured image, the target imaging information being information relating to target imaging conditions;
a captured image information derivation unit (8) configured to derive captured image information by referring to the captured image, the captured image information being information relating to imaging conditions of the captured image; and
an imaging adjustment information derivation unit (9) configured to derive imaging adjustment information relating to adjustment of the imaging conditions of the imaging apparatus by referring to the target imaging information and the captured image information.

According to the configuration described above, the target imaging conditions can be acquired from the captured image and the imaging conditions of the captured image can be acquired from the captured image. This allows imaging adjustment information corresponding to these imaging conditions and relating to adjusting the imaging conditions of the imaging apparatus to be derived. Then, the user of the imaging apparatus can easily capture an image with imaging conditions similar to target imaging conditions, based on the imaging adjustment information, by referring to the imaging adjustment information.

The imaging adjustment information derivation apparatus (3, 21, 31) according to a second aspect of the present invention has the same configuration as that of the first aspect, except that the captured image may include a marker, and the target imaging information reading unit may read the target imaging information from the marker included in the captured image.

According to the configuration described above, by configuring the target imaging information corresponding to the marker in advance, the target imaging information can be easily read.

The imaging adjustment information derivation apparatus (3, 21, 31) according to a third aspect has the same configuration as the second aspect, except that the imaging conditions included in the target imaging information and the captured image information may include at least one of image quality, frame rate, image size, file format, imaging mode, or a relative position between the marker and the imaging apparatus.

According to the configuration described above, imaging adjustment information of the imaging apparatus corresponding to image quality, frame rate, image size, file format, imaging mode, and the relative position between the marker and the imaging apparatus can be derived.

The imaging adjustment information derivation apparatus (3, 21, 31) according to a fourth aspect of the present invention has the same configuration as that of the second or third aspect, except that the target imaging information reading unit reads, from the marker, a position and shape of the marker in a target image, the target image being an image to be captured under the target imaging conditions;
the captured image information derivation unit derives the position and shape of the marker in the captured image by referring to the captured image; and
the imaging adjustment information derivation unit references the position and shape of the marker in the target image and the position and shape of the marker in the captured image and derives imaging adjustment information relating to adjustment of a relative position between the marker and the imaging apparatus from the relative position between the marker and the imaging apparatus at the timing when the captured image is captured to the relative position between the marker and the imaging apparatus where the target image can be captured.

According to the configuration described above, the position and shape of the marker in the target image can be acquired from the marker, and the position and shape of the marker in the captured image can be acquired from the captured image. Then, according to these imaging conditions, imaging adjustment information relating to adjustment of the imaging conditions of the imaging apparatus from the relative position between the marker and the imaging apparatus at the timing when the captured image is captured to the relative position between the marker and the imaging apparatus where the target image can be captured can be derived.

The imaging adjustment information derivation apparatus (3, 31) according to a fifth aspect of the present invention has the same configuration as that of the first to fourth aspect, except that it may further include an adjustment indication information generation unit (10) configured to generate adjustment indication information to be presented to a user by referring to the imaging adjustment information, the adjustment indication information relating to the imaging conditions of the imaging apparatus.

According to the configuration described above, the user of the imaging apparatus can reference the imaging adjustment indication information based on the imaging adjustment information to easily adjust the imaging conditions of the imaging apparatus from the imaging conditions of the captured image to the target imaging conditions and easily capture an image with the imaging conditions similar to the target imaging conditions.

The imaging adjustment information derivation apparatus (21) according to a sixth aspect of the present invention has the same configuration as that of the first to fifth aspect, except that it may further include an imaging apparatus controller (23) configured to control the imaging apparatus to adjust the imaging conditions of the imaging apparatus from the imaging conditions of the captured image to the target imaging conditions by referring to the imaging adjustment information.

According to the configuration described above, an image with the imaging conditions similar to the target imaging conditions, based on the imaging adjustment information, can be automatically captured.

The imaging adjustment information derivation apparatus (31) according to a seventh aspect of the present invention has the same configuration as that of the first to sixth aspect, except that it further includes a captured image additional information acquisition unit (32) configured to acquire captured image additional information from outside of the imaging adjustment information derivation apparatus, the captured image additional information being additional information relating to the imaging conditions of the captured image; the imaging adjustment information derivation unit may derive the imaging adjustment information by referring to the captured image additional information.

According to the configuration described above, by further referring to the acquired captured image additional information, imaging adjustment information, relating to adjustment of the imaging conditions, that cannot be derived from the captured image can be acquired. Thus, the imaging conditions can be adjusted in a wider range by using the imaging adjustment information.

An imaging apparatus (1, 20, 30) according to an eighth aspect of the present invention includes an imaging unit (2) configured to capture the captured image; and the imaging adjustment information derivation apparatus according to any one of the first to seventh aspect.

According to the configuration described above, imaging adjustment information can be derived based on the captured image captured by the imaging apparatus.

A method for deriving imaging adjustment information according to a ninth aspect of the present invention includes the steps of
acquiring a captured image captured by an imaging apparatus;
reading target imaging information from the captured image, the target imaging information being information relating to target imaging conditions;
deriving captured image information by referring to the captured image, the captured image information being information relating to imaging conditions of the captured image; and
deriving imaging adjustment information relating to adjustment of the imaging conditions of the imaging apparatus by referring to the target imaging information and the captured image information.

According to the configuration described above, an effect similar to that of the imaging adjustment information derivation apparatus according to the first aspect can be achieved.

The imaging adjustment information derivation apparatus according to each aspect of the present invention may be implemented by a computer. In this case, a control program of the imaging adjustment information derivation apparatus that causes a computer to operate as each unit (software component) included in the imaging adjustment information derivation apparatus to implement the imaging adjustment information derivation apparatus by the computer and a computer-readable recording medium on which the control program is recorded are also included in the scope of the present invention.

The present invention is not limited to each of the above-described embodiments. It is possible to make various modifications within the scope of the claims. An embodiment obtained by appropriately combining technical elements each disclosed in different embodiments falls also within the technical scope of the present invention. Further, when technical elements disclosed in the respective embodiments are combined, it is possible to form a new technical feature.

### Cross-Reference of Related Application

This application claims the benefit of priority to JP 2016-234516 filed on December 1, 2016, which is incorporated herein by reference in its entirety.

### Reference Signs List

- 1, 20, 30: Imaging apparatus
- 2: Imaging unit
- 3, 21, 31: Imaging adjustment information derivation apparatus
- 4: Adjustment indication information output unit
- 5: Captured image acquisition unit
- 6: Marker search unit
- 7: Target imaging information reading unit
- 8: Captured image information derivation unit
- 9: Imaging adjustment information derivation unit
- 10: Adjustment indication information generation unit
- 22: Imaging apparatus adjustment unit
- 23: Imaging apparatus controller
- 32: Captured image additional information acquisition unit

## Claims

1. An imaging adjustment information derivation apparatus, comprising:
a captured image acquisition unit configured to acquire a captured image captured by an imaging apparatus;
a target imaging information reading unit configured to read target imaging information from the captured image, the target imaging information being information relating to target imaging conditions;
a captured image information derivation unit configured to derive captured image information by referring to the captured image, the captured image information being information relating to imaging conditions of the captured image; and
an imaging adjustment information derivation unit configured to derive imaging adjustment information relating to adjustment of the imaging conditions of the imaging apparatus by referring to the target imaging information and the captured image information.

2. The imaging adjustment information derivation apparatus according to claim 1, wherein
the target imaging information reading unit reads the target imaging information from a marker included in the captured image.

3. The imaging adjustment information derivation apparatus according to claim 2, wherein
the imaging conditions included in the target imaging information and the captured image information include at least one of image quality, frame rate, image size, file format, imaging mode, or a relative position between the marker and the imaging apparatus.

4. The imaging adjustment information derivation apparatus according to claim 2 or 3, wherein
the target imaging information reading unit reads, from the marker, a position and shape of the marker in a target image, the target image being an image to be captured under the target imaging conditions;
the captured image information derivation unit derives the position and shape of the marker in the captured image by referring to the captured image; and
the imaging adjustment information derivation unit derives imaging adjustment information relating to adjustment of a relative position between the marker and the imaging apparatus from the relative position between the marker and the imaging apparatus at the timing when the captured image is captured to the relative position between the marker and the imaging apparatus where the target image can be captured, by referring to the position and shape of the marker in the target image and the position and shape of the marker in the captured image.

5. The imaging adjustment information derivation apparatus according to any one of claims 1 to 4, further comprising
an adjustment indication information generation unit configured to generate adjustment indication information to be presented to a user by referring to the imaging adjustment information, the adjustment indication information relating to the imaging conditions of the imaging apparatus.

6. The imaging adjustment information derivation apparatus according to any one of claims 1 to 5, further comprising
an imaging apparatus controller configured to control the imaging apparatus to adjust the imaging conditions of the imaging apparatus from the imaging conditions of the captured image to the target imaging conditions by referring to the imaging adjustment information.

7. The imaging adjustment information derivation apparatus according to any one of claims 1 to 6, further comprising
a captured image additional information acquisition unit configured to acquire captured image additional information from outside of the imaging adjustment information derivation apparatus, the captured image additional information being additional information relating to the imaging conditions of the captured image; and wherein
the imaging adjustment information derivation unit derive the imaging adjustment information by referring to the captured image additional information.

8. An imaging apparatus, comprising:
an imaging unit configured to capture the captured image; and
the imaging adjustment information derivation apparatus according to any one of claims 1 to 7.

9. A method for deriving imaging adjustment information, the method comprising the steps of:
acquiring a captured image captured by an imaging apparatus;
reading target imaging information from the captured image, the target imaging information being information relating to target imaging conditions;
deriving captured image information by referring to the captured image, the captured image information being information relating to imaging conditions of the captured image; and
deriving imaging adjustment information relating to adjustment of the imaging conditions of the imaging apparatus by referring to the target imaging information and the captured image information.

10. A control program configured to cause a computer to operate as the imaging adjustment information derivation apparatus according to claim 1, wherein
the control program causes the computer to operate as the captured image acquisition unit, the target imaging information reading unit, the captured image information derivation unit, and the imaging adjustment information derivation unit.

11. A computer readable recording medium comprising the control program according to claim 10 recorded thereon.
